# EUROPÄISCHE PATENTSCHRIFT

(11) **EP 3 490 954 B1**
(45) Veröffentlichungstag und Bekanntmachung des Hinweises auf die Patenterteilung: **12.02.2020**
(21) Anmeldenummer: 17737829.6
(22) Anmeldetag: 13.07.2017
(51) Int. Cl.: C04B 30/00, C04B 18/02, C04B 20/10, C04B 111/28

(54) **VERFAHREN ZUR HERSTELLUNG EINES HYDROPHOBE KIESELSÄURE ENTHALTENDEN WÄRMEDÄMMENDEN MATERIALS**
METHOD FOR PRODUCING HEAT INSULATING MATERIAL COMPRISING HYDROPHOBIC PYROGENIC SILICA
PROCÉDÉ DE FABRICATION D'UN MATERIAU ISOLANT QUI CONTIENT DE LA SILICE PYROGÈNE HYDROPHOBE

(30) Priorität: 29.07.2016 EP 16181905
(43) Veröffentlichungstag der Anmeldung: 05.06.2019
(73) Patentinhaber: Evonik Operations GmbH, 45128 Essen (DE)
(72) Erfinder: SCHULTZ, Thorsten, 64739 Hassenroth (DE); GEISLER, Matthias, 37176 Nörten-Hardenberg (DE); OLEK, Maciej, 63796 Kahl (DE); TSCHERNJAEW, Juri, 63743 Aschaffenburg (DE); ASBAHR, Hark-Oluf, 67161 Gönnheim (DE); GÄRTNER, Gabriele, 63454 Hanau (DE)
(74) Vertreter: Evonik Patent Association
(86) Internationale Anmeldenummer: PCT/EP2017/067660
(87) Internationale Veröffentlichungsnummer: WO 2018/019599

(56) Entgegenhaltungen:
- EP-A1- 0 919 526
- EP-A1- 2 028 329
- WO-A1-2015/007450
- DE-A1-102007 020 716
- DE-A1-102010 029 513
- DE-C1- 19 948 394
- US-A- 4 175 159
- US-A- 5 183 710

## Beschreibung

Die Erfindung betrifft ein Verfahren zur Herstellung eines hydrophoben, wärmedämmenden Materials.

In WO2006/097668 wird ein wärmedämmendes Granulat offenbart, welches durch Mischen einer hydrophoben Kieselsäure und eines Trübungsmittels, nachfolgender Verpressung und Granulation erhalten wird.

In WO2013/013714 wird ein Verfahren zur Herstellung eines hydrophoben, wärmedämmenden Formkörpers offenbart, bei dem man in eine Kammer, die einen mikroporösen, hydrophile Kieselsäure aufweisenden, wärmedämmenden Formkörper enthält, solange dampfförmige Organosilane einbringt, bis die Druckdifferenz Δp ≥ 20 mbar beträgt. Das Verfahren kann so ausgeführt werden, dass der Druck in der Kammer vor dem Einbringen des Organosilanes entweder kleiner oder größer als Atmosphärendruck ist.

In EP-A-1988228 wird ein Verfahren zur Herstellung hydrophober, wärmedämmender Platten offenbart, bei dem Organosilane in flüssiger Form während des Mischvorganges einer hydrophilen, wärmedämmenden Mischung umfassend pyrogene Kieselsäure und Trübungsmittel zugesetzt und anschließend verpresst werden. Die Reaktion der Organosilane mit der Kieselsäure soll dabei während des Pressvorganges oder unmittelbar danach stattfinden. Es hat sich gezeigt, dass in Abhängigkeit vom eingesetzten Organosilan und der vorherrschenden Temperatur kaum durchgehend hydrophobierte, wärmedämmende Platten erhältlich sind. Die Siedepunkte der einsetzbaren Organosilane liegen zwischen 40 und 130°C.

In WO2011/069923 wird ein Verfahren zur Herstellung hydrophober, wärmedämmender Platten offenbart, bei dem im Gegensatz zu EP-A-1988228 flüssige Organosilane mit einem Siedepunkt von mehr als 130°C eingesetzt werden. Nachteilig an diesem Verfahren ist das schwierige Entfernen nicht reagierter Organosilane.

In WO2016/020215 wird ein Verfahren zur Herstellung eines hydrophoben, wärmedämmenden Formkörpers offenbart, bei dem man einen hydrophilen, hochdisperse Kieselsäure enthaltenden wärmedämmenden Formkörper mit einem dampfförmigen Hydrophobierungsmittel unter Bildung eines mit Hydrophobierungsmittel belegten Formkörpers in Kontakt bringt, nachfolgend diesen verpresst und während des Verpressens und/oder im Anschluss an das Verpressen mit dem Hydrophobierungsmittel unter Bildung des hydrophoben, wärmedämmenden Formkörpers zur Reaktion bringt. Hierzu ist es erforderlich, dass der hydrophile, wärmedämmende Formkörper bei Inkontaktbringen mit dem Hydrophobierungsmittel eine Dichte besitzt, die wenigstens 50% der Dichte des hydrophoben, wärmedämmenden Formkörpers nach dem Verpressen und nach der Reaktion mit dem Hydrophobierungsmittel beträgt. Die Dichte des hydrophoben, wärmedämmenden Formkörpers beträgt 100 - 250 kg/m³.

DE 10 2010 029513 A1 beschreibt ein Verfahren zur Herstellung einer Wärmedämm-Pulvermischung, die zu einem Festkörper verpresst werden kann, durch intensives Vermischen von einer hydrophilen pyrogenen Kieselsäure, einer hydrophoben pyrogenen Kieselsäure, einem Aerogel, Cellulosefaser und Graphit-Pulver. Die hydrophobe pyrogene Kieselsäure ist dabei mit einem Polydimethylsiloxan (PDMS, Siedepunkt > 200 °C) vorbeschichtet, bevor diese mit anderen Bestandteilen des Gemisches vermischt wird. Es wird kein reaktionsfähiges Silan oder Polysiloxan dem Gemisch zugegeben.

Bei den Verfahren nach dem Stand der Technik werden Organosilane entweder flüssig oder dampfförmig eingesetzt. Nachteilig bei der dampfförmigen Zuführung des Organosilanes sind zeit-und kostenintensive Vorgänge wie zyklische Druck- und Temperaturwechsel oder Spülvorgänge. Zudem sind teure Apparate, wie Vakuum- bzw. Druck-Reaktoren, Vakuumpumpen, Verdichter und Verdampfer nötig.

Als nachteilig bei der Zuführung des Organosilanes über die Flüssigphase ist das Sicherstellen einer homogenen Hydrophobierung zu betrachten. Ebenso kann eine inhomogene Gasbildung zu lokalen Riss-/Blasenbildungen im Formkörper führen und so dessen Stabilität beeinträchtigen.

Aufgabe der vorliegenden Erfindung war es daher ein, gegenüber dem Stand der Technik verbessertes Verfahren zur Herstellung hydrophober, wärmedämmender Materialien bereitzustellen.

Gegenstand der Erfindung ist ein Verfahren zur Herstellung eines hydrophobe Kieselsäure enthaltenden, wärmedämmenden Gemisches, indem man
a) ein pulverförmiges Trägermaterial ausgewählt aus der Gruppe bestehend aus Fällungskieselsäuren, SiO₂-Aerogelen, Perliten und Mischungen hiervon mit einer flüssigen, siliciumhaltigen Verbindung belegt,
   wobei die flüssige, siliciumhaltige Verbindung wenigstens eine Alkylgruppe und einen Siedepunkt von weniger als 200°C aufweist, und
b) das so mit der flüssigen, siliciumhaltigen Verbindung belegte, pulverförmige Trägermaterial mit einer eine pulverförmige, hydrophile, pyrogene Kieselsäure umfassenden Zusammensetzung mischt und das Gemisch bei mehr als 40°C thermisch behandelt
c) nachfolgend gegebenenfalls nicht reagierte siliciumhaltige Verbindung aus dem thermisch behandelten Gemisch entfernt und so das hydrophobe Kieselsäure enthaltende, wärmedämmende Gemisch erhält.

Die Belegung kann hierbei über weite Grenzen variiert werden und ist nur limitiert von der maximal möglichen Belegung des pulverförmigen Trägermateriales. Die maximale Belegung ist so definiert, dass das belegte Trägermaterial ein immer noch fließfähiges Pulver ist. Gewöhnlich wird eine hohe Beladung, sprich 50% oder mehr der maximalen Beladung gewählt um zu gewährleisten, dass die Beladung möglichst homogen auf alle Partikel des Trägermaterials verteilt ist. In einer bevorzugten Ausführungsform ist der Anteil an flüssiger, siliciumhaltiger Verbindung 10-300 g pro 100 g pulverförmigem Trägermaterial. Besonders bevorzugt ist ein Bereich von 50 - 200 g pro 100 g pulverförmigem Trägermaterial.

Das Verhältnis von pyrogener Kieselsäure zu belegtem Trägermaterial ist zunächst einmal nicht beschränkt. Aufgrund der schlechteren Wärmedämmeigenschaften der Trägermaterialien Fällungskieselsäure und Perlit wird man bestrebt sein, deren Anteil möglichst gering zu halten. Das pulverförmige Trägermaterial SiO₂-Aerogel weist sehr gute Wärmedämmeigenschaften auf, hier wird man aus ökonomischen Gesichtspunkten versuchen, den Anteil gering zu halten. Bevorzugt ist der Anteil des mit der flüssigen, siliciumhaltigen Verbindung belegten pulverförmigen Trägermateriales 1 - 50 g pro 100 g pulverförmige, hydrophile, pyrogene Kieselsäure. Besonders bevorzugt ist ein Bereich von 3 bis 15 g belegtes, pulverförmiges Trägermaterial pro 100 g pulverförmige, hydrophile, pyrogene Kieselsäure.

In der Regel wird die Menge an flüssiger, siliciumhaltiger Verbindung so gewählt, dass die pulverförmige, hydrophile, pyrogene Kieselsäure und, falls von einem hydrophilen, pulverförmigen Trägermaterial ausgegangen wird, auch das Trägermaterial vollständig hydrophobiert wird.

In einer besonderen Ausführungsform geht man von einer Massenzunahme von 1 bis 10 Gew.-% aus, die für eine vollständige Hydophobierung der pulverförmigen, hydrophilen, pyrogenen Kieselsäure und gegebenenfalls des hydrophilen, pulverförmigen Trägermaterials notwendig sind. Hierzu wählt man 1-20 g flüssiger, siliciumhaltiger Verbindung/ 100 g (pulverförmige, hydrophile, pyrogene Kieselsäure + pulverförmiges, hydrophiles Trägermaterial).

Die Belegung des Trägermateriales mit der flüssigen, siliciumhaltigen Verbindung wird man bevorzugt bei einer möglichst niedrigen Temperatur durchführen, die unterhalb des Siedepunktes der flüssigen siliciumhaltigen Verbindung liegt. Weiterhin wird man die Temperatur bei der Belegung so wählen, dass keine nennenswerte Reaktion der flüssigen, siliciumhaltigen Verbindung mit dem pulverförmigen Trägermaterial stattfindet. Ein geeigneter Temperaturbereich, der beiden Kriterien gerecht wird, ist 0-40°C.

Das mit der flüssigen, siliciumhaltigen Verbindung belegte Trägermaterial wird nachfolgend mit der pulverförmigen, hydrophilen, pyrogenen Kieselsäure vermischt, wobei gängige, schonende Mischmethoden eingesetzt werden, beispielsweise mittels eines Pflugscharmischers. Nachfolgend wird das Gemisch bei mehr als 40°C, bevorzugt 60-200°C, besonders bevorzugt 80 - 150°C, thermisch behandelt. Bei der thermischen Behandlung erfolgt eine Hydrophobierung der pulverförmigen, hydrophilen, pyrogenen Kieselsäure und, falls von einem hydrophilen, pulverförmigen Trägermaterial ausgegangen wird, auch des Trägermateriales. Dabei geht man davon aus, dass die flüssige, siliciumhaltige Verbindung des belegten Trägermaterials sukzessive verdampft, der Dampf sich ausbreitet und hervorgerufen durch die weitestgehend homogene Mischung nahe am Reaktionsort mit Silanolgruppen der pulverförmigen, hydrophilen, pyrogenen Kieselsäure reagiert. Diese Reaktion findet typischerweise bei Normaldruck statt. Gebildete Reaktionsprodukte, zum Beispiel NH₃ oder HCl, verlassen aufgrund ihres Dampfdruckes und des Konzentrationsgefälles das Gemisch. Die überschüssige siliciumhaltige Verbindung kann vollständig ausgetrieben werden. Hierzu kann eine ausreichend lange Lagerung, auch bei Raumtemperatur, ausreichen.

Die Absorptionskapazität von Kieselsäure wird gegenüber DOA, Di-(2-ethylhexyl)adipat, nach ISO19246: 2016 (en), (https://www.iso.org/obp/ui/#iso:std:iso:19246:ed-1:v1:en) bestimmt.

In der vorliegenden Erfindung kann bevorzugt ein pulverförmiges Trägermaterial eingesetzt werden, welches einen Quotienten DOA-Absorption/Stampfdichte von 0,005 - 0,1 l/g, wobei die DOA-Absorption in g pro 100 g Trägermaterial und die Stampfdichte in g/l angegeben ist. Besonders bevorzugt ist ein Bereich von 0,01 - 0,05 l/g.

Die pulverförmige, hydrophile, pyrogene Kieselsäure weist bevorzugt einen Quotienten DOA-Absorption/Stampfdichte von 0,02 -0,1 l/g, besonders bevorzugt 2,5 -10, auf.

Die besten Ergebnisse werden erhalten, wenn der Quotient DOA-Absorption/ Stampfdichte der pulverförmigen, hydrophilen, pyrogenen Kieselsäure größer ist als der entsprechende Quotient des pulverförmigen Trägermateriales.

### Trägermaterialien

SiO₂-Aerogele werden durch Trocknung eines Gels hergestellt. Unter den Begriff Aerogel sollen auch Xerogele fallen. Dabei wird ein getrocknetes Gel als Aerogel bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch entfernt, dann bezeichnet man das entstandene Gel vielfach auch als Xerogel. Aerogele können sowohl hydrophil als auch hydrophob vorliegen. Sie weisen sehr gute Wärmedämmeigenschaften und gute Eigenschaften als Träger für die in dem erfindungsgemäßen Verfahren eingesetzten flüssigen, siliciumhaltigen Verbindungen auf. Beispiele von SiO₂-Aerogele finden sich in DE-A-19506141 oder EP-A-810822.

Fällungskieselsäuren werden durch Reaktion eines Alkaliwasserglases mit Schwefelsäure erhalten. Der Niederschlag wird filtriert, gewaschen und getrocknet. Die BET-Oberfläche der im erfindungsgemäßen Verfahren bevorzugt eingesetzten gefällten Kieselsäure beträgt 150- 750 m²/g. Fällungskieselsäuren besitzen eine gute Trägerwirkung bezogen auf das Volumen. Geeignete Fällungskieselsäuren sind in EP-A-647591, EP-A-798348, EP-A-937755, WO2004/014795, WO2004/065299 und WO2010/012638 offenbart. Geeignete Fällungskieselsäuren sind zum Beispiel unter Markennamen SIPERNAT® von Evonik Industries erhältlich.

Neben Fällungskieselsäuren und SiO₂-Aeroglelen können auch geblähte Perlitpulver eingesetzt werden. Aufgrund der im Vergleich etwas schlechteren Wärmedämmeigenschaften kommt der Einsatz von geblähten Perlitpulvern hauptsächlich in Mischungen mit Fällungskieselsäuren und/oder SiO₂-Aerogelen in Frage.

Eine bevorzugte Ausführungsform der Erfindung sieht vor, dass das pulverförmige Trägermaterial eine DOA-Absorption von 200 - 300 g/100 g aufweist. Weiterhin ist bevorzugt, dass die Stampfdichte des Trägermaterials 90 - 300 g/l beträgt.

### Pulverförmige, hydrophile, pyrogene Kieselsäure

Pyrogene Kieselsäuren werden mittels Flammenhydrolyse oder Flammenoxidation hergestellt. Dabei werden hydrolysierbare oder oxidierbare Ausgangstoffe in der Regel in einer Wasserstoff-Sauerstoffflamme oxidiert, beziehungsweise hydrolysiert. Als Ausgangsstoffe für pyrogene Verfahren können organische und anorganische Stoffe eingesetzt werden. Besonders geeignet ist Siliciumtetrachlorid. Die so erhaltene hydrophile Kieselsäure ist amorph. Pyrogene Kieselsäuren liegen in der Regel in aggregierter Form vor. Unter "aggregiert" ist zu verstehen, dass sogenannte Primärpartikel, die bei der Genese zunächst entstehen, sich im weiteren Reaktionsverlauf fest miteinander unter Bildung eines dreidimensionalen Netzwerkes verbinden. Die Primärpartikel sind weitestgehend porenfrei und weisen auf ihrer Oberfläche freie Hydroxylgruppen auf. Die BET-Oberfläche der im erfindungsgemäßen Verfahren bevorzugt eingesetzten pyrogenen Kieselsäure beträgt 150 - 500 m²/g. Gemäß DIN 53206 weisen die Aggregate in der Regel Durchmesser von 100 bis 1000 nm auf.

Geeignete hydrophile, pyrogene Kieselsäuren sind zum Beispiel unter Markennamen AEROSIL® von Evonik Industries erhältlich.

Eine bevorzugte Ausführungsform der Erfindung sieht vor, dass die pulverförmige, hydrophile, pyrogene Kieselsäure eine DOA-Absorption von 200 - 300 g/100 g und eine Stampfdichte von 30-70 g/l aufweist.

Bei der im erfindungsgemäßen Verfahren eingesetzten siliciumhaltigen Verbindung handelt es sich um eine flüssige Verbindung mit wenigstens einer Alkylgruppe und einem Siedepunkt von weniger als 200°C. Sie wird bevorzugt aus der Gruppe bestehend aus CH₃-Si-Cl₃, (CH₃)₂-Si-Cl₂, (CH₃)₃-Si-Cl, C₂H₅-Si-Cl₃, (C₂H₅)₂-Si-Cl₂, (C₂H₅)₃-Si-Cl, C₃H₈-Si-Cl₃, CH₃-Si-(OCH₃)₃, (CH₃)₂-Si-(OCH₃)₂, (CH₃)₃-Si-OCH₃, C₂H₅-Si-(OCH₃)₃, (C₂H₅)₂-Si-(OCH₃)₂, (C₂H₅)₃-Si-OCH₃, C₈H₁₅-Si-(OC₂H₅)₃, C₈H₁₅-Si-(OCH₃)₃, (H3C)3-Si-NH-Si(CH3)3 und Mischungen hiervon ausgewählt. Besonders bevorzugt ist (H₃C)₃-Si-NH-Si(CH₃)₃.

Die hydrophile, pyrogene Kieselsäure umfassende Zusammensetzung kann weiterhin wenigstens ein IR-Trübungsmittel und gegebenenfalls organische oder anorganische Fasern enthalten. Der Anteil an hydrophiler, pyrogener Kieselsäure beträgt bevorzugt 60 - 90 Gew-.% und an IR-Trübungsmittels 10-30 Gew.-%, jeweils bezogen auf die Zusammensetzung. Bevorzugt handelt es sich bei dem IR-Trübungsmittel um Titanoxide, Zirkonoxide, Ilmenite, Eisentitanate, Eisenoxide, Zirkonsilikate, Siliciumcarbide, Manganoxide, Graphite und/oder Ruße. Die Partikelgröße der Trübungsmittel liegt in der Regel zwischen 0,1 bis 25 µm.

Eine Weiterentwicklung des erfindungsgemäßen Verfahrens sieht vor, dass vor der thermischen Behandlung eine Verdichtung des Gemisches erfolgt.

Dabei sollte der Zeitraum zwischen Verdichtung und thermischer Behandlung möglichst kurz bemessen sein, um ein Verdampfen der siliciumhaltigen Verbindung zu minimieren. Bevorzugt sollte dieser Zeitraum nicht mehr als 3 Stunden, besonders bevorzugt nicht mehr als 1 Stunde und ganz besonders bevorzugt 1 - 30 Minuten betragen.

Dabei sollte die Temperatur zwischen Verdichtung und thermischer Behandlung möglichst niedrig sein, um ein Verdampfen der siliciumhaltigen Verbindung zu minimieren. Bevorzugt sollte diese 0-40°C betragen.

So kann das Gemisch zu einem Granulat verdichtet werden. Die Stampfdichte des Granulates beträgt bevorzugt 100 - 400 g/l. Die Verdichtung kann beispielsweise mittels eines Vakuumwalzenverdichters erfolgen.

Ebenso kann das Gemisch vor der thermischen Behandlung zu einer Platte verpresst werden, deren Dichte bevorzugt im Bereich von Dichte 140-200 kg/m³ liegt.

### Beispiele

Beispiel 1: Zu 60g SIPERNAT® 50 S werden über einen Zeitraum von 45 Minuten unter Rühren 108g HMDS (Hexamethyldisilazan) langsam zudosiert. Es entsteht ein rieselfähiges Pulver. Bei einer Temperatur von 20°C werden 9,5 g dieses Pulvers zu 50 g eines Gemisches bestehend aus 80 Gew.-% AEROSIL® 300 und 20 Gew.-% SiC (SILCAR G14 von Firma ESK-SIC) gegeben und 5 Minuten bei geringer Drehzahl eingemischt. Die Stampfdichte beträgt ca. 60 g/l. Das so erhaltene Gemisch wird in einen auf 150°C vorgeheizten Ofen mit Stickstoff-Überschleierung und Gasabsaugung eingebracht und bei dieser Temperatur 2 Stunden gehalten. Danach wird der Ofen abgeschaltet und 12 Stunden abkühlen lassen.

Beispiel 2: Zu 60g SIPERNAT® 50 S werden über einen Zeitraum von 45 Minuten unter Rühren 108g HMDS langsam zudosiert. Es entsteht ein rieselfähiges Pulver. Bei einer Temperatur von 20°C werden 9,5 g dieses Pulvers zu 50 g eines Gemisches bestehend aus 80 Gew.-% AEROSIL® 300 und 20 Gew.-% SiC (SILCAR G14 von Firma ESK-SIC) gegeben und 5 Minuten mittels eines Pflugscharmischers eingemischt. Die Stampfdichte beträgt ca. 60 g/l. Diese Mischung wird mittels einer Vakuum-Verdichterwalze, Vacupress, auf eine Stampfdichte von 250 g/l verdichtet. Das so erhaltene Gemisch wird innerhalb eines Zeitraumes von drei Stunden seit seiner Herstellung in einen auf 150°C vorgeheizten Ofen mit Stickstoff-Überschleierung und Gasabsaugung eingebracht und bei dieser Temperatur 2 Stunden gehalten. Danach wird der Ofen abgeschaltet und 12 Stunden abkühlen lassen.

Beispiel 3: Zu 60g SIPERNAT® 50 S werden über einen Zeitraum von 45 Minuten unter Rühren 108g HMDS langsam zudosiert. Es entsteht ein rieselfähiges Pulver. Bei einer Temperatur von 20°C werden 9,5 g dieses Pulvers zu 50 g eines Gemisches bestehend aus 80 Gew.-% AEROSIL® 300 und 20 Gew.-% SiC (SILCAR G14 von Firma ESK-SIC) gegeben und 5 Minuten mittels eines Pflugscharmischers eingemischt. Die Stampfdichte beträgt ca. 60 g/l. Das so erhaltene Gemisch wird mittels einer entlüftbaren Presse zu einer Platte verpresst. Hierbei wird das Gemisch innerhalb einer Minute um mindestens den Faktor 2 verdichtet. Danach wird die Platte entspannt.

Die so erhaltene Platte wird innerhalb eines Zeitraumes von drei Stunden seit ihrer Herstellung in einen auf 150°C vorgeheizten Ofen mit Stickstoff-Überschleierung und Gasabsaugung eingebracht und bei dieser Temperatur 2 Stunden gehalten. Danach wird der Ofen abgeschaltet und 12 Stunden abkühlen lassen.

Die Dichte der resultierenden Platte beträgt 160 g/l.

**Tabelle: Einsatzstoffe - physikalisch-chemische Werte**

| SIPERNAT® 50 S | |
|---|---|
| BET-Oberfläche | 500 m²/g |
| DOA-Absorption | 258 g /100 g |
| Stampfdichte | 105 g/l |
| DOA-Absorption/Stampfdichte | 0,025 l/g |

| AEROSIL® 300 | |
|---|---|
| BET-Oberfläche | 300 m²/g |
| DOA-Absorption | 235g / 100 g |
| Stampfdichte | 50 g/l |
| DOA-Absorption/Stampfdichte | 0,047 l/g |

| Berechnete Werte | |
|---|---|
| g HMDS/ 100 g SIPERNAT® 50 S | 180 |
| g (SIPERNAT® 50 S + HMDS) / 100 g AEROSIL® 300 | 23,8 |
| g HMDS / 100 g (SIPERNAT® 50 S + AEROSIL® 300) | 14 |

AEROSIL® 300 als pyrogene Kieselsäure und das als Trägermaterial eingesetzte SIPERNAT® 50 S zeigen eine vergleichbare DOA-Absorption. Die um den Faktor 2 höhere Stampfdichte des Trägermateriales im Vergleich zu AEROSIL® 300, führt dazu, dass der Volumenanteil des Trägermateriales in einem Wärmedämmkörper oder Wäremdämmgranulat um den Faktor 2 geringer ist im Vergleich zu einem Wärmedämmkörper oder Wäremdämmgranulat, bei denen die pyrogene Kieselsäure als Trägermaterial fungiert. Dies ist vorteilhaft im Bezug auf die Gesamtwärmeleitfähigkeit, da das Trägermaterial naturgemäß schlechter dämmt als pyrogene Kieselsäure. Würde man die pyrogene Kieselsäure als alleiniges Trägermaterial einsetzen, würde deren vorteilhafte Porenstruktur aufgrund der Kapillarkräfte verloren gehen, und somit die von Haus bessere Wärmedämmung ebenfalls schlechter werden.

## Patentansprüche

1. Verfahren zur Herstellung eines hydrophobe Kieselsäure enthaltenden, wärmedämmenden Gemisches, **dadurch gekennzeichnet, dass** man
a) ein pulverförmiges hydrophiles Trägermaterial ausgewählt aus der Gruppe bestehend aus Fällungskieselsäuren, SiO₂-Aerogelen, Perliten und Mischungen hiervon mit einer flüssigen, siliciumhaltigen Verbindung belegt, wobei die flüssige, siliciumhaltige Verbindung wenigstens eine Alkylgruppe und einen Siedepunkt von weniger als 200°C aufweist, und
b) das so mit der flüssigen, siliciumhaltigen Verbindung belegte, pulverförmige Trägermaterial mit einer eine pulverförmige, hydrophile, pyrogene Kieselsäure umfassenden Zusammensetzung mischt und das Gemisch bei mehr als 40°C thermisch behandelt und
c) nachfolgend gegebenenfalls nicht reagierte siliciumhaltige Verbindung aus dem thermisch behandelten Gemisch entfernt und so das hydrophobe Kieselsäure enthaltende, wärmedämmende Gemisch erhält.

2. Verfahren nach Anspruch 1, **dadurch gekennzeichnet, dass**
der Anteil der flüssigen, siliciumhaltigen Verbindung 10 - 300 g pro 100 g pulverförmigem Trägermaterial ist.

3. Verfahren nach den Ansprüchen 1 oder 2, **dadurch gekennzeichnet, dass**
der Anteil des mit der flüssigen, siliciumhaltigen Verbindung belegten pulverförmigen Trägermateriales 1 - 50 g pro 100 g pulverförmige, hydrophile, pyrogene Kieselsäure ist.

4. Verfahren nach den Ansprüchen 1 bis 3, **dadurch gekennzeichnet, dass**
der Anteil an flüssiger, siliciumhaltiger Verbindung 1 - 20 g pro 100 g (pulverförmige, hydrophile, pyrogene Kieselsäure + pulverförmiges, hydrophiles Trägermaterial) ist.

5. Verfahren nach den Ansprüchen 1 bis 4, **dadurch gekennzeichnet, dass**
die Temperatur bei der Belegung 0-40°C ist.

6. Verfahren nach den Ansprüchen 1 bis 5, **dadurch gekennzeichnet, dass**
das pulverförmige Trägermaterial einen Quotienten aus DOA-Absorption/Stampfdichte von 0,005 - 0,1 l/g aufweist, wobei die DOA-Absorption in g pro 100 g Trägermaterial und die Stampfdichte in g/l angegeben ist.

7. Verfahren nach den Ansprüchen 1 bis 6, **dadurch gekennzeichnet, dass**
das pulverförmige Trägermaterial eine DOA-Absorption von 200 - 300 g/100 g aufweist.

8. Verfahren nach den Ansprüchen 1 bis 7, **dadurch gekennzeichnet, dass**
das pulverförmige Trägermaterial eine Stampfdichte von 90 - 300 g/l aufweist.

9. Verfahren nach den Ansprüchen 1 bis 8, **dadurch gekennzeichnet, dass**
die pulverförmige, hydrophile, pyrogene Kieselsäure einen Quotienten aus DOA-Absorption/ Stampfdichte von 0,02 -0,1 l/g aufweist, wobei die DOA-Absorption in g pro 100 g Kieselsäure und die Stampfdichte in g/l angegeben ist.

10. Verfahren nach den Ansprüchen 1 bis 9, **dadurch gekennzeichnet, dass**
der Quotient aus DOA-Absorption/ Stampfdichte der pulverförmigen, hydrophilen, pyrogenen Kieselsäure größer ist als der des pulverförmigen Trägermateriales.

11. Verfahren nach den Ansprüchen 1 bis 10, **dadurch gekennzeichnet, dass**
das pulverförmige Trägermaterial hydrophobiert ist.

12. Verfahren nach den Ansprüchen 1 bis 11, **dadurch gekennzeichnet, dass**
die pulverförmige, hydrophile, pyrogene Kieselsäure eine DOA-Absorption von 200 - 300 g/100 g und eine Stampfdichte von 30-70 g/l aufweist.

13. Verfahren nach den Ansprüchen 1 bis 12, **dadurch gekennzeichnet, dass**
die flüssige, siliciumhaltige Verbindung aus der Gruppe bestehend aus CH₃-Si-Cl₃, (CH₃)₂-Si-Cl₂, (CH₃)₃-Si-Cl, C₂H₅-Si-Cl₃, (C₂H₅)₂-Si-Cl₂, (C₂H₅)₃-Si-Cl, C₃H₈-Si-Cl₃, CH₃-Si-(OCH₃)₃, (CH₃)₂-Si-(OCH₃)₂, (CH₃)₃-Si-OCH₃, C₂H₅-Si-(OCH₃)₃, (C₂H₅)₂-Si-(OCH₃)₂, (C₂H₅)3-Si-OCH₃, C₈H₁₅-Si-(OC₂H₅)₃, C₈H₁₅-Si-(OCH₃)₃, (H3C)3-Si-NH-Si(CH3)3 und Mischungen hiervon ausgewählt ist.

14. Verfahren nach den Ansprüchen 1 bis 13, **dadurch gekennzeichnet, dass**
die die hydrophile, pyrogene Kieselsäure umfassende Zusammensetzung ein IR-Trübungsmittel und/oder anorganische Fasern enthält.

15. Verfahren nach Anspruch 14, **dadurch gekennzeichnet, dass**
der Anteil der Kieselsäure 60 - 90 Gew.-% und des IR-Trübungsmittels 10-30 Gew.-%, bezogen auf die Zusammensetzung, beträgt.

16. Verfahren nach den Ansprüchen 1 bis 15, **dadurch gekennzeichnet, dass**
vor der thermischen Behandlung eine Verdichtung des Gemisches erfolgt.

17. Verfahren nach Anspruch 16, **dadurch gekennzeichnet, dass**
der Zeitraum zwischen Verdichtung und thermischer Behandlung nicht mehr als 3 Stunden beträgt.

18. Verfahren nach den Ansprüchen 16 oder 17, **dadurch gekennzeichnet, dass**
die Temperatur zwischen Verdichtung und thermischer Behandlung 0-40°C beträgt.

19. Verfahren nach den Ansprüchen 16 bis 18, **dadurch gekennzeichnet, dass**
man das Gemisch zu einem Granulat verdichtet.

20. Verfahren nach den Ansprüchen 16 bis 18, **dadurch gekennzeichnet, dass**
man das Gemisch zu einer Platte verdichtet.

## Claims

1. Process for producing a thermally insulating mixture comprising hydrophobic silica, **characterized in that**
a) a pulverulent hydrophilic carrier material selected from the group consisting of precipitated silicas, SiO₂ aerogels, perlites and mixtures thereof is coated with a liquid silicon compound, where the liquid silicon compound has at least one alkyl group and a boiling point of less than 200°C, and
b) the pulverulent carrier material that has thus been coated with the liquid silicon compound is mixed with a composition comprising a pulverulent hydrophilic fumed silica and the mixture is subjected to thermal treatment at more than 40°C and
c) any unreacted silicon compound is subsequently removed from the thermally treated mixture, thus giving the thermally insulating mixture comprising hydrophobic silica.

2. Process according to Claim 1, **characterized in that**
the proportion of the liquid silicon compound is 10-300 g per 100 g of pulverulent carrier material.

3. Process according to Claim 1 or 2, **characterized in that**
the proportion of the pulverulent carrier material coated with the liquid silicon compound is 1-50 g per 100 g of pulverulent hydrophilic fumed silica.

4. Process according to Claims 1 to 3, **characterized in that**
the proportion of liquid silicon compound is 1-20 g per 100 g of (pulverulent hydrophilic fumed silica + pulverulent hydrophilic carrier material).

5. Process according to Claims 1 to 4, **characterized in that**
the temperature in the coating operation is 0-40°C.

6. Process according to Claims 1 to 5, **characterized in that**
the pulverulent carrier material has a quotient of DOA absorption/tamped density of 0.005-0.1 1/g, where the DOA absorption is reported in g per 100 g of carrier material and the tamped density in g/l.

7. Process according to Claims 1 to 6, **characterized in that**
the pulverulent carrier material has a DOA absorption of 200-300 g/100 g.

8. Process according to Claims 1 to 7, **characterized in that**
the pulverulent carrier material has a tamped density of 90-300 g/l.

9. Process according to Claims 1 to 8, **characterized in that**
the pulverulent hydrophilic fumed silica has a quotient of DOA absorption/tamped density of 0.02-0.1 1/g, where the DOA absorption is reported in g per 100 g of silica and the tamped density in g/l.

10. Process according to Claims 1 to 9, **characterized in that**
the quotient of DOA absorption/tamped density of the pulverulent hydrophilic fumed silica is greater than that of the pulverulent carrier material.

11. Process according to Claims 1 to 10, **characterized in that**
the pulverulent carrier material has been hydrophobized.

12. Process according to Claims 1 to 11, **characterized in that**
the pulverulent hydrophilic fumed silica has a DOA absorption of 200-300 g/100 g and a tamped density of 30-70 g/l.

13. Process according to Claims 1 to 12, **characterized in that**
the liquid silicon compound is selected from the group consisting of CH₃-Si-Cl₃, (CH₃)₂-Si-Cl₂, (CH₃)₃-Si-Cl, C₂H₅-Si-Cl₃, (C₂H₅)₂-Si-Cl₂, (C₂H₅)₃-Si-Cl, C₃H₈-Si-Cl₃, CH₃-Si-(OCH₃)₃, (CH₃)₂-Si-(OCH₃)₂, (CH₃)₃-Si-OCH₃, C₂H₅-Si-(OCH₃)₃, (C₂H₅)₂-Si-(OCH₃)₂, (C₂H₅)₃-Si-OCH₃, C₈H₁₅-Si-(OC₂H₅)₃, C₈H₁₅-Si-(OCH₃)₃, (H₃C)₃-Si-NH-Si(CH₃)₃ and mixtures thereof.

14. Process according to Claims 1 to 13, **characterized in that**
the composition comprising the hydrophilic fumed silica comprises an IR opacifier and/or inorganic fibres.

15. Process according to Claim 14, **characterized in that**
the proportion of the silica is 60%-90% by weight and that of the IR opacifier 10%-30% by weight, based on the composition.

16. Process according to Claims 1 to 15, **characterized in that**
the mixture is compacted prior to the thermal treatment.

17. Process according to Claim 16, **characterized in that**
the period between compaction and thermal treatment is not more than 3 hours.

18. Process according to Claim 16 or 17, **characterized in that**
the temperature between compaction and thermal treatment is 0-40°C.

19. Process according to Claims 16 to 18, **characterized in that**
the mixture is compacted to a granular material.

20. Process according to Claims 16 to 18, **characterized in that**
the mixture is compacted to a board.

## Revendications

1. Procédé de fabrication d'un mélange isolant thermique, contenant une silice hydrophobe, **caractérisé en ce que**
a) un matériau support hydrophile en poudre choisi dans le groupe constitué par les silices précipitées, les aérogels de SiO₂, les perlites et leurs mélanges est recouvert avec un composé liquide contenant du silicium, le composé liquide contenant du silicium comprenant au moins un groupe alkyle et présentant un point d'ébullition inférieur à 200 °C, et
b) le matériau support en poudre ainsi recouvert avec le composé liquide contenant du silicium est mélangé avec une composition comprenant une silice pyrogénée hydrophile en poudre, et le mélange est traité thermiquement à une température supérieure à 40 °C, puis
c) le composé contenant du silicium non réagi est éventuellement éliminé du mélange traité thermiquement, et le mélange isolant thermique contenant une silice hydrophobe est ainsi obtenu.

2. Procédé selon la revendication 1, **caractérisé en ce que** la proportion du composé liquide contenant du silicium est de 10 à 300 g pour 100 g de matériau support en poudre.

3. Procédé selon la revendication 1 ou 2, **caractérisé en ce que** la proportion du matériau support en poudre recouvert avec le composé liquide contenant du silicium est de 1 à 50 g pour 100 g de silice pyrogénée hydrophile en poudre.

4. Procédé selon les revendications 1 à 3, **caractérisé en ce que** la proportion de composé liquide contenant du silicium est de 1 à 20 g pour 100 g (de silice pyrogénée hydrophile en poudre + matériau support hydrophile en poudre).

5. Procédé selon les revendications 1 à 4, **caractérisé en ce que** la température lors du recouvrement est de 0 à 40 °C.

6. Procédé selon les revendications 1 à 5, **caractérisé en ce que** le matériau support en poudre présente un quotient de l'absorption DOA/densité tassée de 0,005 à 0,1 l/g, l'absorption DOA étant indiquée en g pour 100 g de matériau support et la densité tassée en g/l.

7. Procédé selon les revendications 1 à 6, **caractérisé en ce que** le matériau support en poudre présente une absorption DOA de 200 à 300 g/100g.

8. Procédé selon les revendications 1 à 7, **caractérisé en ce que** le matériau support en poudre présente une densité tassée de 90 à 300 g/l.

9. Procédé selon les revendications 1 à 8, **caractérisé en ce que** la silice pyrogénée hydrophile en poudre présente un quotient de l'absorption DOA/densité tassée de 0,02 à 0,1 l/g, l'absorption DOA étant indiquée en g pour 100 g de silice et la densité tassée en g/l.

10. Procédé selon les revendications 1 à 9, **caractérisé en ce que** le quotient de l'absorption DOA/densité tassée de la silice pyrogénée hydrophile en poudre est supérieur à celui du matériau support en poudre.

11. Procédé selon les revendications 1 à 10, **caractérisé en ce que** le matériau support en poudre est hydrophobé.

12. Procédé selon les revendications 1 à 11, **caractérisé en ce que** la silice pyrogénée hydrophile en poudre présente une absorption DOA de 200 à 300 g/100 g et une densité tassée de 30 à 70 g/l.

13. Procédé selon les revendications 1 à 12, **caractérisé en ce que** le composé liquide contenant du silicium est choisi dans le groupe constitué par CH₃-Si-Cl₃, (CH₃)₂-Si-Cl₂, (CH₃)₃-Si-Cl, C₂H₅-Si-Cl₃, (C₂H₅)₂-Si-Cl₂, (C₂H₅)₃-Si-Cl, C₃H₈-Si-Cl₃, CH₃-Si-(OCH₃)₃, (CH₃)₂-Si-(OCH₃)₂, (CH₃)₃-Si-OCH₃, C₂H₅-Si-(OCH₃)₃, (C₂H₅)₂-Si-(OCH₃)₂, (C₂H₅)₃-Si-OCH₃, C₈H₁₅-Si-(OC₂H₅)3, C₈H₁₅-Si-(OCH₃)₃, (H₃C)₃-Si-NH-Si(CH₃)₃ et leurs mélanges.

14. Procédé selon les revendications 1 à 13, **caractérisé en ce que** la composition comprenant la silice pyrogénée hydrophile contient un agent opacifiant IR et/ou des fibres inorganiques.

15. Procédé selon la revendication 14, **caractérisé en ce que** la proportion de la silice est de 60 à 90 % en poids et celle de l'agent opacifiant IR est de 10 à 30 % en poids, par rapport à la composition.

16. Procédé selon les revendications 1 à 15, **caractérisé en ce qu'**un compactage du mélange a lieu avant le traitement thermique.

17. Procédé selon la revendication 16, **caractérisé en ce que** la durée entre le compactage et le traitement thermique n'est pas supérieure à 3 heures.

18. Procédé selon les revendications 16 ou 17, **caractérisé en ce que** la température entre le compactage et le traitement thermique est de 0 à 40 °C.

19. Procédé selon les revendications 16 à 18, **caractérisé en ce que** le mélange est compacté en un granulat.

20. Procédé selon les revendications 16 à 18, **caractérisé en ce que** le mélange est compacté en une plaque.
